# EUROPEAN PATENT APPLICATION

(11) **EP 4 636 656 A1**
(43) Date of publication of application: **22.10.2025**
(21) Application number: 25161143.0
(22) Date of filing: 28.02.2025
(51) Int. Cl.: G06N 10/20, G06N 10/40, G06N 10/60

(54) **INFORMATION PROCESSING PROGRAM, INFORMATION PROCESSING METHOD, AND INFORMATION PROCESSING DEVICE**

(30) Priority: 18.04.2024 JP 2024067836
(71) Applicant: FUJITSU LIMITED, Kawasaki-shi, Kanagawa 211-8588 (JP)
(72) Inventor: ASO, Noriyasu, Kawasaki-shi, 211-8588 (JP); KIBUNE, Masaya, Kawasaki-shi, 211-8588 (JP)
(74) Representative: Haseltine Lake Kempner LLP

(57) **Abstract**

A program including instructions which, when executed by a computer, cause the computer to execute: specifying two or more patterns that represent combinations of values of respective parameters of multiple parameters defining a variational quantum circuit to be used for quantum chemical computation in computation by a variational quantum eigensolver method; selecting one or more first parameters determined to have a relatively high degree of contribution to the computation from the multiple parameters using a calculation result of a cost function used for the quantum chemical computation for each pattern of the two or more patterns that have been specified; and controlling, by setting the one or more first parameters as target parameters whose value is to be updated in the computation, an arithmetic device that executes the variational quantum circuit such that at least one iteration of the computation is executed using the one or more first parameters.

## Description

### FIELD

The embodiment discussed herein is related to an information processing program, an information processing method, and an information processing device.

### BACKGROUND

In related art, in the field of material development, drug discovery research, or the like, variational quantum eigensolver (VQE) exists as a method of executing quantum chemical computation in which the properties of a target molecule or a target atom are investigated. For example, VQE executes computation in which a series of processing called iteration is repeatedly executed until a convergence condition is satisfied. In the following description, there are cases in which the computation is referred to as "VQE computation". For example, iteration is a series of processing in which a variational quantum circuit is executed, an expected value of the Hamiltonian is calculated based on a quantum state obtained by executing the variational quantum circuit, and parameters of the variational quantum circuit are updated so as to minimize the expected value of the Hamiltonian.

For example, there is related art in which optimization operation is executed in which a spin variable is set as a continuous variable that virtually continuously deforms and an output value of an evaluation function that satisfies a constraint condition is calculated. For example, there is a technique of constructing a prediction model from learning data in which information related to the composition of a material is set as an explanatory variable and a physical property value of the material is set as an objective variable. For example, there is a technique of optimizing parameters of a variational quantum circuit in a cluster in a state where the other parameters of the variational quantum circuit outside the cluster are fixed. For example, there is a technique of defining an objective function that optimizes a combination of N input parameters. For example, there is a technique of calculating an updated value of each parameter of a plurality of parameters such that an expected value of energy takes a local minimum value, based on the expected value of energy calculated by using a variational quantum circuit.

Japanese Laid-open Patent Publication No. 2021-117977, International Publication Pamphlet No. WO 2023/058519, U.S. Patent No. 11645442, U.S. Patent Application Publication No. 2014/0309974, and International Publication Pamphlet No. WO 2023/144884 are disclosed as related art.

### SUMMARY

### TECHNICAL PROBLEM

However, in related art, there is a problem that the processing time taken when VQE computation is executed increases. For example, as the number of parameters defining a variational quantum circuit increases, the processing time taken for one iteration tends to increase and the number of times of executing iteration tends to increase, and the processing time taken when VQE computation is executed increases.

In one aspect, it is desirable to achieve reduction in the processing time taken when VQE computation is executed.

### SOLUTION TO PROBLEM

According to an aspect of the embodiments, there is provided an information processing program including instructions which, when executed by a computer, cause the computer to execute processing including: specifying two or more patterns that represent combinations of values of respective parameters of a plurality of parameters that defines a predetermined variational quantum circuit to be used for quantum chemical computation in computation by a variational quantum eigensolver method; selecting one or more first parameters determined to have a relatively high degree of contribution to the computation from the plurality of parameters based on a calculation result of a predetermined cost function used for the quantum chemical computation for each pattern of the two or more patterns that have been specified; and controlling, by setting the one or more first parameters as target parameters whose value is to be updated in the computation, an arithmetic device that executes the predetermined variational quantum circuit, to cause the arithmetic device executes at least one iteration of the computation using the one or more first parameters.

### ADVANTAGEOUS EFFECTS OF INVENTION

According to an aspect, it is possible to achieve reduction in the processing time taken when VQE computation is executed.

### BRIEF DESCRIPTION OF DRAWINGS

The invention is described, by way of example only, with reference to the following drawings, in which:
FIG. 1 is an explanatory diagram illustrating an exemplary embodiment of an information processing method according to an embodiment;
FIG. 2 is an explanatory diagram illustrating an example of an information processing system;
FIG. 3 is a block diagram illustrating a hardware configuration example of an information processing device;
FIG. 4 is a block diagram illustrating a hardware configuration example of a quantum computation device;
FIG. 5 is a block diagram illustrating a functional configuration example of the information processing device;
FIG. 6 is an explanatory diagram illustrating an example of the operation of the information processing device (part 1);
FIG. 7 is an explanatory diagram illustrating an example of the operation of the information processing device (part 2);
FIG. 8 is an explanatory diagram illustrating an example of the operation of the information processing device (part 3);
FIG. 9 is an explanatory diagram illustrating an example of the operation of the information processing device (part 4);
FIG. 10 is an explanatory diagram illustrating an example of the operation of the information processing device (part 5);
FIG. 11 is an explanatory diagram illustrating a specific example of the operation of the information processing device (part 1);
FIG. 12 is an explanatory diagram illustrating a specific example of the operation of the information processing device (part 2);
FIG. 13 is an explanatory diagram illustrating a specific example of the operation of the information processing device (part 3);
FIG. 14 is an explanatory diagram illustrating a specific example of the operation of the information processing device (part 4);
FIG. 15 is an explanatory diagram illustrating a specific example of the operation of the information processing device (part 5);
FIG. 16 is an explanatory diagram illustrating a specific example of the operation of the information processing device (part 6);
FIG. 17 is a flowchart illustrating an example of an overall processing procedure (part 1); and
FIG. 18 is a flowchart illustrating an example of the overall processing procedure (part 2).

### DESCRIPTION OF EMBODIMENTS

Hereinafter, an embodiment of an information processing program, an information processing method, and an information processing device according to the present disclosure will be described in detail with reference to the drawings.

(Exemplary Embodiment of Information Processing Method According to Embodiment)

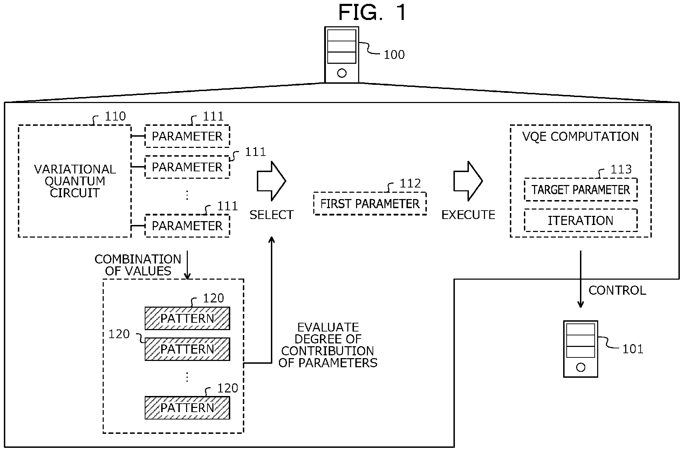

FIG. 1 is an explanatory diagram illustrating an exemplary embodiment of the information processing method according to the embodiment. An information processing device 100 is a computer for executing VQE computation. For example, the information processing device 100 is a server, a personal computer (PC), or the like.

VQE computation is repeated execution of a series of processing called iteration until a convergence condition is satisfied. For example, iteration is a series of processing in which a variational quantum circuit is executed, an expected value of the Hamiltonian is calculated based on a quantum state obtained by executing the variational quantum circuit, and parameters of the variational quantum circuit are updated so as to minimize the expected value of the Hamiltonian. The Hamiltonian corresponds to energy. For example, a convergence condition is that the expected value of the Hamiltonian is equal to or smaller than a threshold.

A case is considered in which VQE computation is executed by a quantum computer and a classical computer in cooperation with each other. For example, the quantum computer calculates an expected value of the Hamiltonian based on the quantum state obtained by executing a variational quantum circuit. On the other hand, for example, the classical computer updates the parameters of the variational quantum circuit. In this case, the quantum computer and the classical computer communicate with each other for each iteration.

In related art, there is a problem that the processing time taken when VQE computation is executed increases. For example, as the number of parameters defining a variational quantum circuit increases, the processing time taken for one iteration tends to increase and the number of times of executing iteration until a convergence condition is satisfied tends to increase, and the processing time taken when VQE computation is executed increases. As the number of parameters defining a variational quantum circuit increases, the number of times a quantum computer and a classical computer communicate with each other increases, and the processing time taken when VQE computation is executed increases.

For this reason, it is desirable to achieve reduction in the processing time taken when VQE computation is executed. With respect to this, a method is considered in which the second and subsequent iterations are executed by limiting parameters to be set as target parameters whose value is to be updated in a plurality of parameters defining a variational quantum circuit according to a result of executing the first iteration. With respect to this method, for example, the above International Publication Pamphlet No. WO 2023/144884 may be referred to.

In this method, since parameters to be set as target parameters are limited according to only a result of executing the first iteration, it is considered that parameters useful in VQE computation are excluded without being set as target parameters. Therefore, in this method, convergence to a local solution may occur, and the accuracy of VQE computation may decrease.

In the present embodiment, the information processing method that may achieve reduction in the processing time taken when VQE computation is executed will be described. For example, according to the information processing method, reduction in the processing time taken when VQE computation is executed may be achieved while maintaining the accuracy of VQE computation.

In FIG. 1, the information processing device 100 may control an arithmetic unit 101 that executes a predetermined variational quantum circuit 110 to be used for quantum chemical computation in VQE computation. For example, the arithmetic unit 101 is a quantum computer. The arithmetic unit 101 may be a quantum simulator. For example, the quantum simulator may exist outside the information processing device 100. For example, the quantum simulator may be included in the information processing device 100. The information processing device 100 stores the predetermined variational quantum circuit 110. For example, the information processing device 100 stores a plurality of parameters 111 defining the predetermined variational quantum circuit 110. The parameter 111 relates to a quantum gate forming the predetermined variational quantum circuit 110. For example, the parameter 111 is a rotation angle of quantum gate.

(1-1) The information processing device 100 specifies two or more patterns 120 representing combinations of the values of respective parameters 111 of the plurality of parameters 111. It is preferable that the information processing device 100 handles the values of parameters 111 such that the values of parameters 111 take any value of a plurality of discrete values. For example, if the information processing device 100 handles the values of parameters 111 such that the values of parameters 111 may take all values within a predetermined range, an increase in the processing amount is caused.

For example, from the viewpoint of suppressing an increase in the processing amount, it is preferable that the information processing device 100 specifies two or more patterns 120 that are a part of all patterns 120 representing combinations of the values of respective parameters 111 of the plurality of parameters 111. For example, there may be a case in which the information processing device 100 specifies all of the patterns 120. For example, the information processing device 100 specifies two or more patterns 120 with reference to an orthogonal table that limits the way of combining the values of respective parameters 111 of the plurality of parameters 111 in accordance with the design of experiments. Consequently, the information processing device 100 may specify which patterns 120 are to be tested for evaluating the degree of contribution to VQE computation for each parameter 111 of the plurality of parameters 111.

(1-2) The information processing device 100 acquires a calculation result of a predetermined cost function to be used for quantum chemical computation for each pattern 120 of the specified two or more patterns 120. For example, the predetermined cost function is a function that returns an expected value of the Hamiltonian. For example, the information processing device 100 acquires, using the arithmetic unit 101, a calculation result of the predetermined cost function for each pattern 120 of the specified two or more patterns 120.

The information processing device 100 evaluates the degree of contribution to VQE computation for each parameter 111 of the plurality of parameters 111 based on the calculation result of the predetermined cost function. For example, the information processing device 100 evaluates the degree of contribution to VQE computation by calculating a correlation coefficient between an objective variable corresponding to the predetermined cost function and an explanatory variable corresponding to each parameter 111 of the plurality of parameters 111 based on the calculation result of the predetermined cost function. For example, it is considered that the correlation coefficient represents that, as the value increases, the degree of contribution to VQE computation increases.

The information processing device 100 selects one or more first parameters 112 determined to have a relatively high degree of contribution to VQE computation from the plurality of parameters 111 based on an evaluation result. For example, the information processing device 100 selects, as the one or more first parameters 112, one or more parameters 111 for which the calculated correlation coefficient is equal to or larger than a threshold, from the plurality of parameters 111. Consequently, the information processing device 100 may determine the parameters 111 useful in VQE computation, and may enable target parameters 113 whose value is to be updated in VQE computation to be accurately set.

(1-3) The information processing device 100 controls the arithmetic unit 101 such that at least one iteration of VQE computation is executed by setting the selected one or more first parameters 112 as the target parameters 113. For example, the information processing device 100 may control the arithmetic unit 101 such that VQE computation is completed by repeatedly executing the iteration until a predetermined convergence condition is satisfied.

Consequently, the information processing device 100 may narrow down the parameters 111 useful in VQE computation and set them as the target parameters 113, and may achieve reduction in the processing time taken when VQE computation is executed while maintaining the accuracy of VQE computation. In this way, the information processing device 100 may achieve both the accuracy and the efficiency of VQE computation.

For example, there may be a case in which the information processing device 100 controls the arithmetic unit 101 such that VQE computation is temporarily suspended after a predetermined number of times of iteration in the VQE computation is executed. In this case, the information processing device 100 may control the arithmetic unit 101 such that, when VQE computation is temporarily suspended, the VQE computation is resumed after the target parameters 113 are reset. In this case, for example, the information processing device 100 may control the arithmetic unit 101 such that, when VQE computation is temporarily suspended, the VQE computation is resumed after any parameter 111 of the plurality of parameters 111 is selected and the selected parameter is added to the target parameters 113.

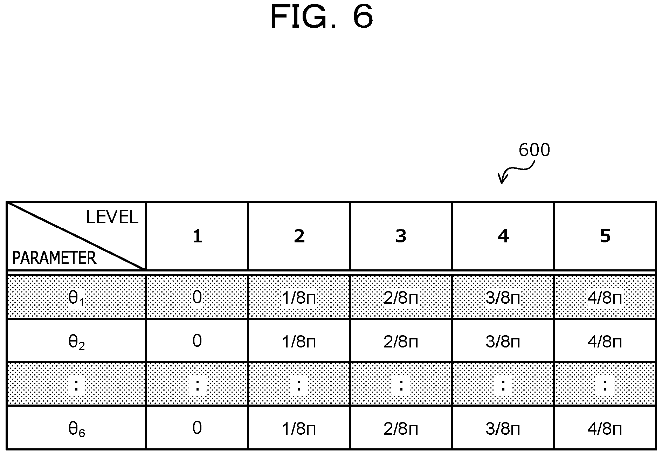

Consequently, the information processing device 100 may cope with variation of the parameters 111 useful in VQE computation during execution of VQE computation, and may achieve reduction in the processing time taken when VQE computation is executed while maintaining the accuracy of VQE computation. In this way, the information processing device 100 may achieve both the accuracy and the efficiency of VQE computation. A specific example of the case in which the information processing device 100 controls the arithmetic unit 101 such that VQE computation is temporarily suspended after a predetermined number of times of iteration in the VQE computation is executed will be described later with reference to FIGs. 6 to 15.

While a case where the function as the information processing device 100 is realized by a single computer has been described, this is not construed in a limiting sense. For example, there may be a case in which the function as the information processing device 100 is realized by cooperation between a plurality of computers. For example, there may be a case in which the function as the information processing device 100 is realized in the cloud.

### (Example of Information Processing System 200)

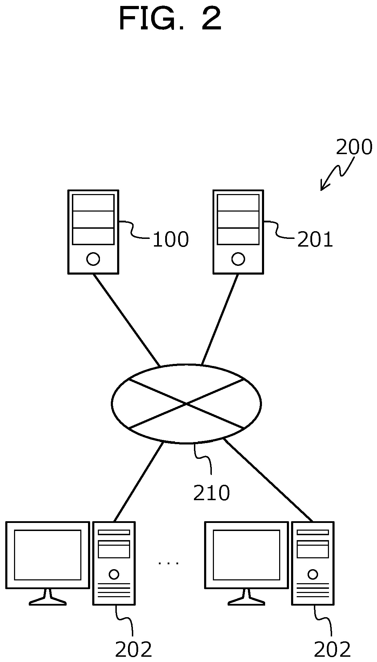

Next, an example of an information processing system 200 in which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100, a quantum computation device 201, and a client device 202.

In the information processing system 200, the information processing device 100 and the quantum computation device 201 are coupled via a wired or wireless network 210. For example, the network 210 is a local area network (LAN), a wide area network (WAN), the Internet, or the like. In the information processing system 200, the information processing device 100 and the client device 202 are coupled via the wired or wireless network 210.

The information processing device 100 is a computer that controls the quantum computation device 201. The information processing device 100 acquires, by reception from the client device 202, a processing request of requesting that a target problem is solved. For example, the processing request includes information defining the problem. For example, the processing request includes information that enables a predetermined variational quantum circuit to be used for quantum chemical computation in VQE computation to be specified. For example, the processing request includes information that enables a plurality of parameters defining a predetermined variational quantum circuit to be specified. For example, the information processing device 100 may acquire the processing request based on the operation input of a user.

In response to the processing request, the information processing device 100 executes VQE computation in cooperation with the quantum computation device 201. For example, as with FIG. 1, the information processing device 100 controls the quantum computation device 201 such that iteration of VQE computation is repeatedly executed by selecting one or more first parameters from a plurality of parameters and setting the first parameters as target parameters whose value is to be updated. For example, there may be a case in which the information processing device 100 temporarily suspends VQE computation each time when the iteration is executed a predetermined number of times. For example, the predetermined number of times is set by a user in advance.

For example, when VQE computation is temporarily suspended, the information processing device 100 may newly select one or more first parameters from the remaining parameters included in the plurality of parameters that are not currently set as target parameters. The information processing device 100 controls the quantum computation device 201 again such that the VQE computation is resumed and the iteration of VQE computation is repeatedly executed after the one or more newly selected first parameters are additionally set as target parameters whose value is to be updated.

The information processing device 100 outputs a result of executing VQE computation. For example, the information processing device 100 transmits the result of executing VQE computation to the client device 202. For example, the information processing device 100 may output the result of executing VQE computation so that a user may refer to the result. For example, the information processing device 100 is a server, a PC, or the like.

The quantum computation device 201 is a computer that executes requested computation processing. The quantum computation device 201 is may execute quantum chemical computation. The quantum computation device 201 may be capable of executing classical computation. The quantum computation device 201 executes quantum chemical computation in accordance with the control of the information processing device 100. The quantum computation device 201 returns a result of executing the quantum chemical computation to the information processing device 100. For example, the quantum computation device 201 is a quantum computer. For example, the quantum computation device 201 may be a classical computer that activates a quantum simulator. For example, the classical computer is a server, a PC, or the like.

The client device 202 is a computer used by a user who desires to execute VQE computation. The client device 202 generates a processing request of requesting that a target problem is solved, and transmits the processing request to the information processing device 100 based on the operation input of a user. The client device 202 receives the result of executing VQE computation from the information processing device 100. The client device 202 outputs the result of executing VQE computation so that a user may refer to the result. For example, the client device 202 is a PC, a tablet terminal, a smartphone, or the like.

While a case where the information processing device 100 and the quantum computation device 201 are different devices has been described, this is not construed in a limiting sense. For example, there may be a case in which the information processing device 100 has the function as the quantum computation device 201 and also operates as the quantum computation device 201. While a case where the information processing device 100 and the client device 202 are different devices has been described, this is not construed in a limiting sense. For example, there may be a case in which the information processing device 100 has the function as the client device 202 and also operates as the client device 202.

### (Application Example of Information Processing System 200)

For example, the information processing system 200 may be applied to the field of material development, drug development, or the like. For example, the information processing system 200 may be applied to an application in which VQE computation is executed for solving a target problem related to a molecule.

(Hardware Configuration Example of Information Processing Device 100)

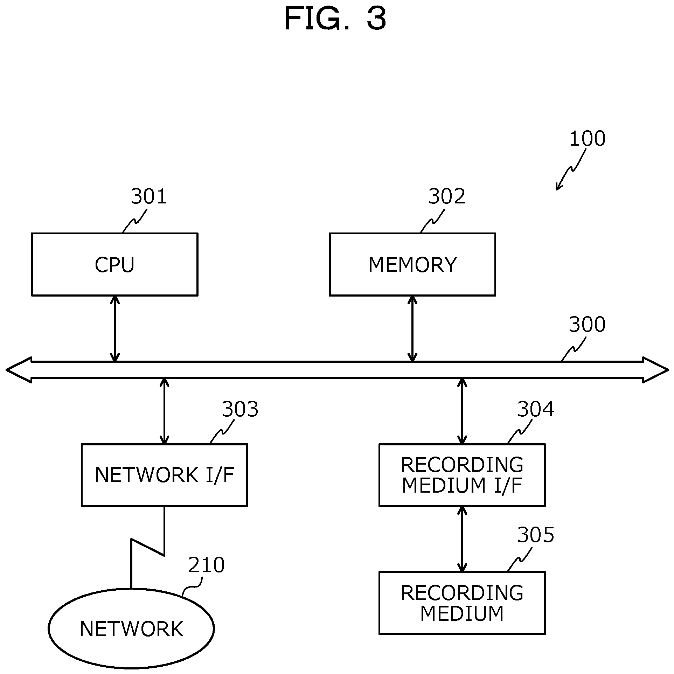

Next, a hardware configuration example of the information processing device 100 will be described with reference to FIG. 3.

FIG. 3 is a block diagram illustrating a hardware configuration example of the information processing device 100. In FIG. 3, the information processing device 100 includes a central processing unit (CPU) 301, a memory 302, a network interface (I/F) 303, a recording medium I/F 304, and a recording medium 305. The constituent units are coupled to one another by a bus 300.

The CPU 301 controls the entirety of the information processing device 100. For example, the memory 302 includes a read-only memory (ROM), a random-access memory (RAM), a flash ROM, and the like. For example, the flash ROM and the ROM store various kinds of programs, and the RAM is used as a work area of the CPU 301. The programs stored in the memory 302 are loaded to the CPU 301, whereby the CPU 301 is caused to execute the coded processing.

The network I/F 303 is coupled to the network 210 through a communication line, and is coupled to another computer via the network 210. The network I/F 303 serves as an interface between the network 210 and the inside of the device, and controls input and output of data from and to the other computer. For example, the network I/F 303 is a modem, a LAN adapter, or the like.

The recording medium I/F 304 controls reading and writing of data from and to the recording medium 305 in accordance with the control of the CPU 301. For example, the recording medium I/F 304 is a disk drive, a solid-state drive (SSD), a Universal Serial Bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be removably attached to the information processing device 100.

In addition to the constituent units described above, for example, the information processing device 100 may include a keyboard, a mouse, a display, a printer, a scanner, a microphone, a speaker, and the like. The information processing device 100 may include a plurality of recording medium I/Fs 304 and a plurality of recording media 305. The information processing device 100 does not have to include the recording medium I/F 304 and the recording medium 305.

### (Hardware Configuration Example of Quantum Computation Device 201)

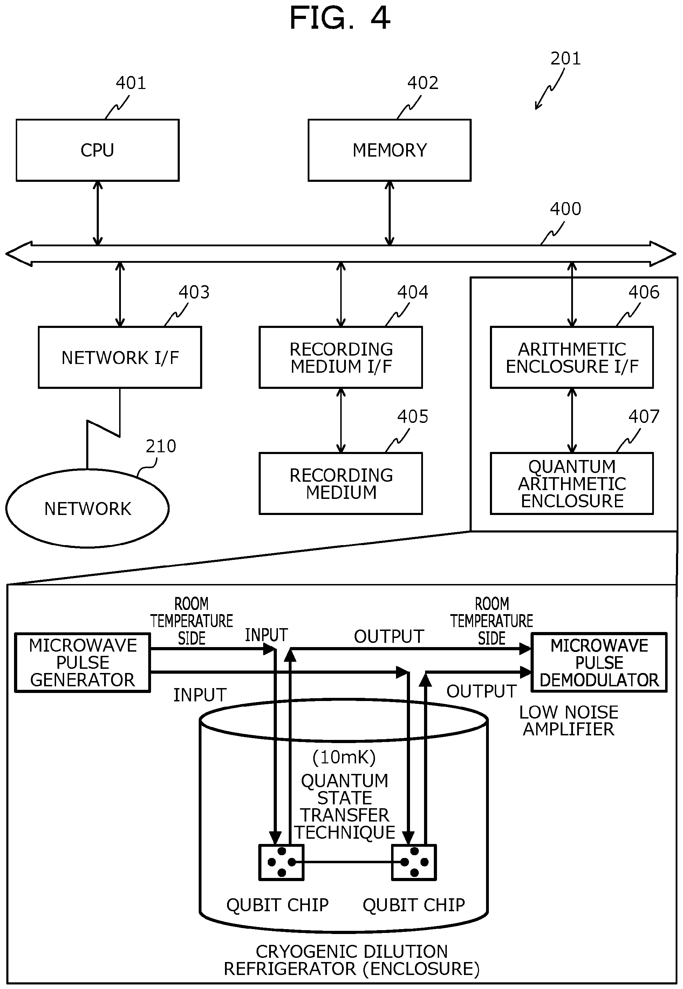

Since a hardware configuration example of the quantum computation device 201 in the case where the quantum computation device 201 is a classical computer that activates a quantum simulator is, for example, similar to the hardware configuration example of the information processing device 100 illustrated in FIG. 3, description thereof is omitted. On the other hand, the case in which the quantum computation device 201 is a quantum computer is considered. A hardware configuration example of the quantum computation device 201 in the case where the quantum computation device 201 is a quantum computer will be described with reference to FIG. 4.

FIG. 4 is a block diagram illustrating a hardware configuration example of the quantum computation device 201. In FIG. 4, the quantum computation device 201 includes a CPU 401, a memory 402, a network I/F 403, a recording medium I/F 404, and a recording medium 405. The quantum computation device 201 includes an arithmetic enclosure I/F 406 and a quantum arithmetic enclosure 407. The constituent units are coupled to one another by a bus 400.

The CPU 401 controls the entirety of the quantum computation device 201. For example, the memory 402 includes a ROM, a RAM, a flash ROM, and the like. For example, the flash ROM and the ROM store various kinds of programs, and the RAM is used as a work area of the CPU 401. The programs stored in the memory 402 are loaded to the CPU 401, whereby the CPU 401 is caused to execute the coded processing.

The network I/F 403 is coupled to the network 210 through a communication line, and is coupled to another computer via the network 210. The network I/F 403 serves as an interface between the network 210 and the inside of the device, and controls input and output of data from and to the other computer. For example, the network I/F 403 is a modem, a LAN adapter, or the like.

The recording medium I/F 404 controls reading and writing of data from and to the recording medium 405 in accordance with the control of the CPU 401. For example, the recording medium I/F 404 is a disk drive, an SSD, a USB port, or the like. The recording medium 405 is a nonvolatile memory that stores data written under the control of the recording medium I/F 404. For example, the recording medium 405 is a disk, a semiconductor memory, a USB memory, or the like. The recording medium 405 may be removably attached to the quantum computation device 201.

The arithmetic enclosure I/F 406 controls access to the quantum arithmetic enclosure 407 in accordance with the control of the CPU 401. The arithmetic enclosure I/F 406 converts an output signal from the CPU 401 into an input signal to the quantum arithmetic enclosure 407 by using a microwave pulse generator, and transmits the signal to the quantum arithmetic enclosure 407. The arithmetic enclosure I/F 406 converts an output signal from the quantum arithmetic enclosure 407 into an input signal to the CPU 401 by using a microwave pulse demodulator, and transmits the signal to the CPU 401. The quantum arithmetic enclosure 407 is an arithmetic device equipped with one or more qubit chips cooled to a significantly low temperature of 10 mK. For example, a qubit chip represents a logical qubit. The quantum arithmetic enclosure 407 executes a predetermined arithmetic operation according to an input signal and outputs an output signal corresponding to a result of the predetermined arithmetic operation by using one or more qubit chips.

In addition to the constituent units described above, for example, the quantum computation device 201 may include a keyboard, a mouse, a display, a printer, a scanner, a microphone, a speaker, and the like. The quantum computation device 201 may include a plurality of recording medium I/Fs 404 and a plurality of recording media 405. The quantum computation device 201 does not have to include the recording medium I/F 404 and the recording medium 405. The qubit chips in the quantum arithmetic enclosure 407 may be controlled by a method other than a microwave. For example, the qubit chips in the quantum arithmetic enclosure 407 may realize an optical qubit.

### (Hardware Configuration Example of Client Device 202)

Since a hardware configuration example of the client device 202 is, for example, similar to the hardware configuration example of the information processing device 100 illustrated in FIG. 3, description thereof is omitted.

### (Functional Configuration Example of Information Processing Device 100)

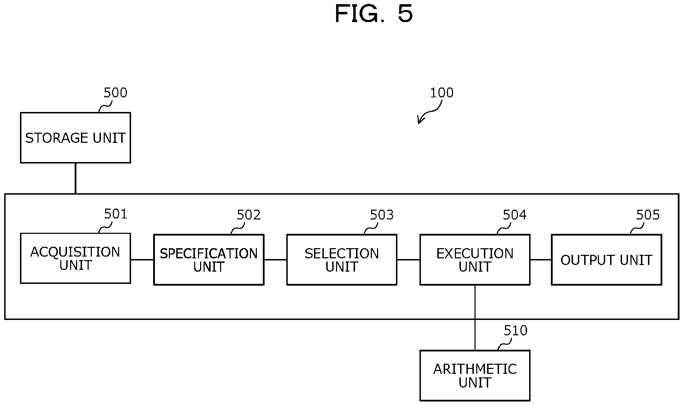

Next, a functional configuration example of the information processing device 100 will be described with reference to FIG. 5.

FIG. 5 is a block diagram illustrating a functional configuration example of the information processing device 100. The information processing device 100 includes a storage unit 500, an acquisition unit 501, a specification unit 502, a selection unit 503, an execution unit 504, and an output unit 505.

The information processing device 100 may control an arithmetic unit 510. For example, the arithmetic unit 510 exists outside the information processing device 100. For example, the arithmetic unit 510 may exist inside the information processing device 100. For example, the arithmetic unit 510 is the quantum computation device 201.

For example, the storage unit 500 is realized by a storage area such as the memory 302 or the recording medium 305 illustrated in FIG. 3. While a case in which the storage unit 500 is included in the information processing device 100 will be described below, this is not construed in a limiting sense. For example, there may be a case in which the storage unit 500 is included in a device different from the information processing device 100 and the stored contents of the storage unit 500 may be referred to from the information processing device 100.

The acquisition unit 501 to the output unit 505 function as an example of a control unit. For example, the acquisition unit 501 to the output unit 505 realize their functions by causing the CPU 301 to execute a program stored in a storage area such as the memory 302 or the recording medium 305 illustrated in FIG. 3 or by the network I/F 303. For example, a processing result of each functional unit is stored in a storage area such as the memory 302 or the recording medium 305 illustrated in FIG. 3.

The storage unit 500 stores various kinds of information to be updated or referred to in the processing of each functional unit. The storage unit 500 stores information that specifies a plurality of parameters defining a predetermined variational quantum circuit to be used for quantum chemical computation in VQE computation. A parameter relates to a quantum gate forming a predetermined variational quantum circuit. For example, the parameter is a rotation angle of quantum gate. For example, the parameter may take any value of a plurality of discrete values. For example, the information that specifies a plurality of parameters is acquired by the acquisition unit 501.

The storage unit 500 stores an orthogonal table that limits the way of combining the values of respective parameters of two or more parameters. For example, the two or more parameters are a plurality of parameters defining a predetermined variational quantum circuit. For example, there may be a case in which the two or more parameters are a part of the plurality of parameters defining a predetermined variational quantum circuit. An orthogonal table is information defined in accordance with the design of experiments.

For example, an orthogonal table prepares two or more levels to be associated with parameters, and defines the way of combining the levels corresponding to respective parameters of two or more parameters. For this reason, an orthogonal table limits the way of combining the values of respective parameters of two or more parameters when any value that may be taken by a parameter is applied to each level. For example, an orthogonal table is set by a user in advance. For example, an orthogonal table may be generated by the specification unit 502.

The acquisition unit 501 acquires various kinds of information to be used for the processing of each functional unit. The acquisition unit 501 stores the acquired various kinds of information in the storage unit 500 or outputs the information to each functional unit. The acquisition unit 501 may output the various kinds of information stored in the storage unit 500 to each functional unit. For example, the acquisition unit 501 acquires various kinds of information based on the operation input of a user. For example, the acquisition unit 501 may receive various kinds of information from a device different from the information processing device 100.

For example, the acquisition unit 501 acquires a processing request of requesting that VQE computation is executed for solving a target problem. For example, the processing request may include information that specifies a plurality of parameters defining a predetermined variational quantum circuit. For example, the acquisition unit 501 acquires the processing request by accepting input of the processing request. For example, the acquisition unit 501 may acquire the processing request by receiving the processing request from another computer. For example, the other computer is the client device 202 or the like.

For example, the acquisition unit 501 acquires information that specifies a plurality of parameters defining a predetermined variational quantum circuit. For example, the acquisition unit 501 acquires the information that specifies a plurality of parameters by extracting the information that specifies a plurality of parameters from the processing request. For example, the acquisition unit 501 may acquire the information that specifies a plurality of parameters by accepting input of the information that specifies a plurality of parameters. For example, the acquisition unit 501 may acquire the information that specifies a plurality of parameters by receiving the information that specifies a plurality of parameters from another computer. For example, the other computer is the client device 202 or the like.

The acquisition unit 501 may accept a start trigger for starting the processing of any functional unit. For example, the start trigger is a predetermined operation input of a user. For example, the start trigger may be reception of predetermined information from another computer. For example, the start trigger may be output of predetermined information by any functional unit. For example, the acquisition unit 501 may accept the acquisition of a processing request as the start trigger for starting the processing of the specification unit 502, the selection unit 503, and the execution unit 504.

The specification unit 502 specifies two or more patterns representing combinations of the values of respective parameters of a plurality of parameters defining a predetermined variational quantum circuit. For example, the specification unit 502 acquires or generates an orthogonal table that limits the way of combining the values of respective parameters in accordance with the design of experiments. For example, the specification unit 502 specifies two or more patterns that are a part of all patterns representing combinations of the values of respective parameters with reference to the orthogonal table. For example, the specification unit 502 specifies two or more patterns that are a part of all patterns representing combinations of the values of respective parameters by applying any value that may be taken by a parameter to each level in the orthogonal table.

Consequently, the specification unit 502 may specify which patterns are to be tested for evaluating the degree of contribution to VQE computation for each parameter. For this reason, the specification unit 502 may appropriately select patterns to be tested, and may do without exhaustively testing all patterns representing combinations of the values of respective parameters. The specification unit 502 may efficiently evaluate the degree of contribution to VQE computation for each parameter, and may achieve reduction in the processing amount.

The selection unit 503 acquires a calculation result of a predetermined cost function to be used for quantum chemical computation for each pattern of the two or more patterns specified by the specification unit 502. For example, the predetermined cost function is a function that returns an expected value of the Hamiltonian. For example, the selection unit 503 acquires, using the arithmetic unit 510, a calculation result of the predetermined cost function for each pattern of the two or more patterns specified by the specification unit 502.

The selection unit 503 selects one or more first parameters determined to have a relatively high degree of contribution to VQE computation from a plurality of parameters based on the acquired calculation result of the predetermined cost function. For example, the selection unit 503 calculates a correlation coefficient between an objective variable corresponding to the predetermined cost function and an explanatory variable corresponding to each parameter. For example, it is considered that the correlation coefficient represents that, as the value increases, the degree of contribution to VQE computation increases. For example, the selection unit 503 selects, as the one or more first parameters, one or more parameters for which the calculated correlation coefficient is equal to or larger than a first threshold, from the plurality of parameters. For example, the first threshold is set in advance by a user. Consequently, the selection unit 503 may determine parameters useful in VQE computation, and may enable target parameters whose value is to be updated in VQE computation to be accurately set.

For example, the selection unit 503 specifies a regression model including an objective variable corresponding to the predetermined cost function, an explanatory variable corresponding to each parameter, and a coefficient related to the explanatory variable. For example, it is considered that the coefficient represents that, as the value increases, the degree of contribution to VQE computation increases. For example, the selection unit 503 selects, as the one or more first parameters, one or more parameters for which the coefficient is equal to or larger than a second threshold in the specified regression model. For example, the second threshold is set in advance by a user. Consequently, the selection unit 503 may determine parameters useful in VQE computation, and may enable target parameters whose value is to be updated in VQE computation to be accurately set.

The execution unit 504 controls the arithmetic unit 510 such that at least one iteration of VQE computation is executed by setting the one or more first parameters selected by the selection unit 503 as target parameters whose value is to be updated in VQE computation. The arithmetic unit 510 may execute a predetermined variational quantum circuit. For example, the execution unit 504 controls the arithmetic unit 510 such that the iteration is repeatedly executed until VQE computation is completed. Consequently, the information processing device 100 may narrow down the parameters useful in VQE computation, set the parameters as target parameters, and then execute VQE computation. For this reason, the information processing device 100 may achieve reduction in the processing time taken when VQE computation is executed while maintaining the accuracy of VQE computation.

The execution unit 504 may temporarily suspend VQE computation when the iteration of VQE computation is executed a predetermined number of times by controlling the arithmetic unit 510. For example, the predetermined number of times is set by a user in advance. A plurality of predetermined numbers of times may be set. For example, the predetermined number of times may be the number of times of a multiple of 10 or the like. It is considered that, when VQE computation is temporarily suspended, the specification unit 502 and the selection unit 503 add, to the target parameters, any parameter that is not currently set as a target parameter from a plurality of parameters.

The specification unit 502 specifies the remaining parameters that are not set as target parameters from a plurality of parameters defining a predetermined variational quantum circuit. The specification unit 502 newly specifies two or more patterns representing combinations of the values of respective parameters of the specified remaining parameters. For example, the specification unit 502 acquires or generates an orthogonal table that limits the way of combining the values of respective parameters of the remaining parameters in accordance with the design of experiments. For example, the specification unit 502 specifies two or more patterns that are a part of all patterns representing combinations of the values of respective parameters of the remaining parameters with reference to the orthogonal table. For example, the specification unit 502 specifies two or more patterns that are a part of all patterns representing combinations of the values of respective parameters of the remaining parameters by applying any value that may be taken by a parameter to each level in the orthogonal table.

Consequently, the specification unit 502 may specify which patterns are to be tested for evaluating the degree of contribution to VQE computation for each parameter of the remaining parameters. For this reason, the specification unit 502 may appropriately select patterns to be tested, and may do without exhaustively testing all patterns representing combinations of the values of respective parameters. The specification unit 502 may efficiently evaluate the degree of contribution to VQE computation for each parameter, and may achieve reduction in the processing amount.

For example, there may be a case in which the specification unit 502 newly specifies two or more patterns representing combinations of the values of respective parameters of the remaining parameters such that the number of patterns to be newly specified increases as the number of parameters included in the remaining parameters decreases. For example, the specification unit 502 determines the number of patterns to be newly specified such that a product of the number of parameters and the number of patterns to be newly specified is equal to or less than a predetermined number. The predetermined number is set by a user in advance. For example, the specification unit 502 newly specifies two or more patterns as many as the specified number, which represent combinations of the values of respective parameters of the remaining parameters.

Consequently, the specification unit 502 may specify which patterns are to be tested for evaluating the degree of contribution to VQE computation for each parameter of the remaining parameters. For this reason, the specification unit 502 may appropriately select patterns to be tested, and may do without exhaustively testing all patterns representing combinations of the values of respective parameters. The specification unit 502 may efficiently evaluate the degree of contribution to VQE computation for each parameter, and may achieve reduction in the processing amount. The specification unit 502 may increase the number of patterns to be tested in a range in which the processing amount is not equal to or larger than a certain amount, and may accurately evaluate the degree of contribution to VQE computation for each parameter.

The selection unit 503 acquires a calculation result of the predetermined cost function for each pattern of the two or more patterns newly specified by the specification unit 502. For example, the selection unit 503 acquires, using the arithmetic unit 510, a calculation result of the predetermined cost function for each pattern of the two or more patterns newly specified by the specification unit 502.

The selection unit 503 newly selects one or more first parameters determined to have a relatively high degree of contribution to VQE computation from the remaining parameters based on the acquired calculation result of the predetermined cost function. For example, the selection unit 503 calculates a correlation coefficient between an objective variable corresponding to the predetermined cost function and an explanatory variable corresponding to each parameter of the remaining parameters. For example, the selection unit 503 newly selects, as the one or more first parameters, one or more parameters for which the calculated correlation coefficient is equal to or larger than a third threshold, from the remaining parameters. For example, the third threshold is set in advance by a user. For example, the third threshold may be the same value as the first threshold. For example, the third threshold may be a value smaller than the first threshold. For example, the third threshold may be variable. Consequently, the selection unit 503 may determine parameters useful in VQE computation, and may enable target parameters whose value is to be updated in VQE computation to be accurately set.

For example, the selection unit 503 specifies a regression model including an objective variable corresponding to the predetermined cost function, an explanatory variable corresponding to each parameter of the remaining parameters, and a coefficient related to the explanatory variable. For example, the selection unit 503 newly selects, as the one or more first parameters, one or more parameters for which the coefficient is equal to or larger than a fourth threshold in the specified regression model. For example, the fourth threshold is set in advance by a user. For example, the fourth threshold may be the same value as the second threshold. For example, the fourth threshold may be a value smaller than the second threshold. For example, the fourth threshold may be variable. Consequently, the selection unit 503 may determine parameters useful in VQE computation, and may enable target parameters whose value is to be updated in VQE computation to be accurately set.

The execution unit 504 further controls the arithmetic unit 510 such that the one or more first parameters newly selected by the selection unit 503 are added to the target parameters and at least one iteration subsequent to the predetermined number of times in VQE computation is executed. For example, the execution unit 504 controls the arithmetic unit 510 such that the VQE computation that has been temporarily suspended is resumed and the iteration is repeatedly executed. Consequently, the information processing device 100 may cope with a case such as when the degree of contribution of parameters to VQE computation varies in the course of VQE computation and parameters useful in VQE computation that are not set as target parameters are generated. The information processing device 100 may narrow down the parameters useful in VQE computation, add the parameters to the target parameters, and then resume VQE computation. For this reason, the information processing device 100 may achieve reduction in the processing time taken when VQE computation is executed while maintaining the accuracy of VQE computation.

The execution unit 504 may temporarily suspend the VQE computation again when the iteration of VQE computation is executed a predetermined number of times by controlling the arithmetic unit 510 after the VQE computation is resumed. When the execution unit 504 controls the arithmetic unit 510 and completes the VQE computation, the execution unit 504 acquires a result of executing VQE computation. For example, the result of executing VQE computation includes a solution to a target problem.

The output unit 505 outputs a processing result of at least any of the functional units. For example, the output form is display on a display, print output to a printer, transmission to an external device through the network I/F 303, or storage in a storage area such as the memory 302 or the recording medium 305. Consequently, the output unit 505 enables a user to be notified of a processing result of at least any of the functional units, and may achieve improvement in the convenience of the information processing device 100.

For example, the output unit 505 outputs the result of executing VQE computation acquired by the execution unit 504. For example, the output unit 505 transmits the result of executing VQE computation to another computer. For example, the other computer is the client device 202 or the like. For example, the output unit 505 may output the result of executing VQE computation so that a user may refer to the result.

### (Example of Operation of Information Processing Device 100)

Next, an example of the operation of the information processing device 100 will be described with reference to FIGs. 6 to 10.

FIGs. 6 to 10 are explanatory diagrams illustrating an example of the operation of the information processing device 100. In FIGs. 6 to 10, the information processing device 100 sorts out parameters useful in VQE computation and limits the target parameters whose value is to be updated in order to achieve reduction in the processing time taken when VQE computation is executed while maintaining the accuracy of VQE computation. The information processing device 100 sorts out parameters useful in VQE computation again and reconsiders the target parameters whose value is to be updated each time when iteration is executed a predetermined number of times in order to improve the accuracy of VQE computation.

When parameters useful in VQE computation are sorted out, the information processing device 100 efficiently evaluates the degree of contribution of parameters to VQE computation based on an orthogonal table in accordance with the design of experiments. For example, the information processing device 100 may accurately determine which patterns are preferable for being tested based on an orthogonal table in accordance with the design of experiments, the patterns representing combinations of the values of respective parameters of a plurality of parameters.

For example, the information processing device 100 tests each pattern of two or more patterns representing combinations of the values of respective parameters of a plurality of parameters by calculating a predetermined cost function, and efficiently evaluates the degree of contribution of the parameters to VQE computation. Hereinafter, an example of the operation of the information processing device 100 will be described in detail with reference to FIGs. 6 to 10. First, description proceeds to that of FIG. 6.

In FIG. 6, the information processing device 100 specifies n parameters defining a variational quantum circuit. The information processing device 100 acquires an orthogonal table in consideration of a relation between parameters. The orthogonal table prepares m levels to be associated with parameters, and defines the way of combining the levels to be associated with each parameter of n parameters. For this reason, the orthogonal table limits the way of combining the values of respective parameters of the n parameters when any value that may be taken by a parameter is applied to each level.

The information processing device 100 calculates, using a predetermined cost function, energy for each pattern of two or more patterns in which the value corresponding to any level is set for each parameter of the n parameters based on the orthogonal table in consideration of the mutual relation. The information processing device 100 searches for, as parameters useful in VQE computation, parameters having a relatively large influence on energy based on the calculated energy, and narrows down the target parameters.

In a case where the information processing device 100 tests m^n patterns representing combinations of the values of respective parameters of the n parameters, an increase in the processing amount may be caused. For this reason, it is preferable that the information processing device 100 suppresses an increase in the processing amount by testing less than m^n patterns based on the orthogonal table. For example, when n = 12 and m = 5, it is considered that the information processing device 100 may search for parameters useful in VQE computation by testing 50 patterns based on the orthogonal table.

In the example of FIG. 6, n = 6 and m = 5. The parameters are θ₁, θ₂, θ₃, θ₄, θ₅, and θ₆. A value of parameter in the range [0, 4/8π] is applied to each level. For example, as illustrated in table 600, the value (maximum value - minimum value)/(m - 1) × i + minimum value is applied to level i. i is 1, 2, ..., m.

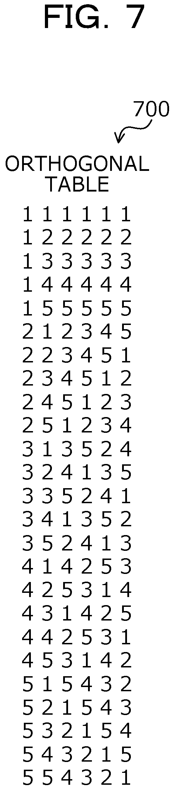

For example, the value 0 is applied to level 1. The value 1/8π is applied to level 2. The value 2/8π is applied to level 3. The value 3/8π is applied to level 4. The value 4/8π is applied to level 5. As illustrated in table 600, each of θ₁, θ₂, θ₃, θ₄, θ₅, and θ₆ may take a value corresponding to any level i. Next, description proceeds to that of FIG. 7, and an example of orthogonal table 700 corresponding to n = 6 and m = 5 will be described.

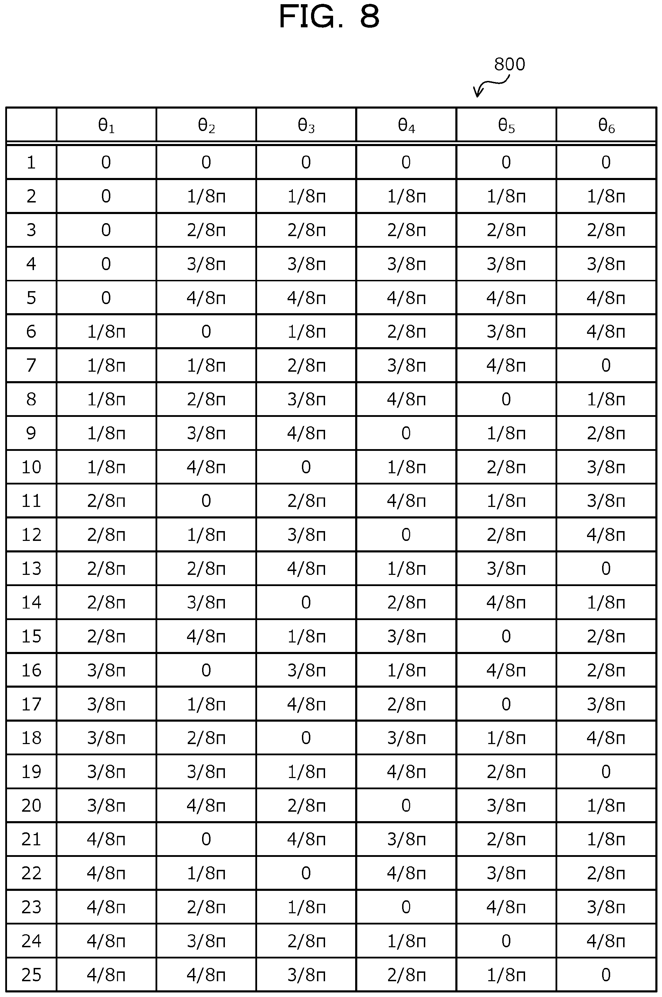

In FIG. 7, each row of orthogonal table 700 indicates a pattern representing a combination of the five levels. For example, orthogonal table 700 indicates 25 patterns. It is considered that the information processing device 100 may search for parameters useful in VQE computation by testing the 25 patterns representing combinations of the values of θ₁, θ₂, θ₃, θ₄, θ₅, and θ₆ based on orthogonal table 700. Next, description proceeds to that of FIG. 8.

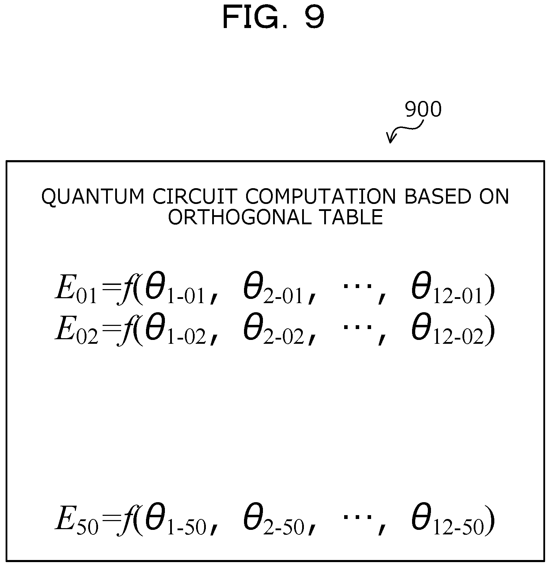

In FIG. 8, as illustrated in table 800, the information processing device 100 specifies the 25 patterns representing combinations of the values of θ₁, θ₂, θ₃, θ₄, θ₅, and θ₆ based on orthogonal table 700. Consequently, the information processing device 100 may specify which patterns representing combinations of the values of θ₁, θ₂, θ₃, θ₄, θ₅, and θ₆ are preferable for being tested by calculating energy using a predetermined cost function. Next, description proceeds to that of FIG. 9.

In the example of FIG. 9, n = 12. In FIG. 9, as illustrated in table 900, by using the quantum computation device 201, the information processing device 100 executes quantum chemical computation and calculates energy for each pattern of the specified 25 patterns using a predetermined cost function. Eⱼ indicates the value of energy calculated for the j-th pattern. θⱼ₋ₖ indicates the value of the k-th parameter θₖ in the j-th pattern.

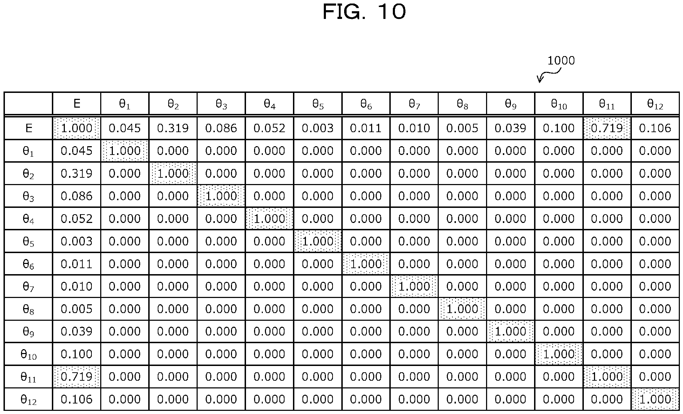

The information processing device 100 searches for and selects, as the parameters useful in VQE computation, parameters having a relatively large influence on energy based on Eⱼ and θⱼ₋ₖ illustrated in table 900. Next, description proceeds to that of FIG. 10, and an example in which the information processing device 100 searches for parameters useful in VQE computation will be described.

In FIG. 10, as illustrated in table 1000, the information processing device 100 calculates a correlation coefficient between an objective variable corresponding to energy and an explanatory variable corresponding to parameter based on Eⱼ and θⱼ₋ₖ. The information processing device 100 selects parameters for which the correlation coefficient is equal to or larger than the first threshold 0.7 as the parameters useful in VQE computation having a relatively large influence on energy. The correlation coefficient related to θ₁₁ is equal to or larger than the first threshold 0.7. Consequently, the information processing device 100 may narrow down the parameters useful in VQE computation, which are preferably set as target parameters whose value is to be updated.

There may be a case in which the information processing device 100 selects parameters useful in VQE computation based on Eⱼ and θⱼ₋ₖ using a regression model including an objective variable corresponding to energy, an explanatory variable corresponding to parameter, and a coefficient related to the explanatory variable. For example, the regression model is E = ∑ₖ₌₁ⁿaₖθₖ. E is an objective variable. θₖ is an explanatory variable. aₖ is a coefficient related to θₖ. In this case, the information processing device 100 selects parameters for which the absolute value of aₖ is equal to or larger than the second threshold as the parameters useful in VQE computation having a relatively large influence on energy. For example, the second threshold may mean the absolute value of aₖ of a certain order from the largest value in the absolute values of aₖ.

There may be a case in which the information processing device 100 selects parameters useful in VQE computation by using both the correlation coefficient and the regression model. In this case, for example, the information processing device 100 selects parameters for which the correlation coefficient is equal to or larger than the first threshold 0.7 as the parameters useful in VQE computation, and then selects parameters for which the absolute value of aₖ is equal to or larger than the second threshold as the parameters useful in VQE computation.

For example, the information processing device 100 may select parameters for which the correlation coefficient is equal to or larger than the first threshold and the absolute value of aₖ is equal to or larger than the second threshold as the parameters useful in VQE computation. In the following description, there are cases in which a set of parameters selected by the information processing device 100 is referred to as "parameter group θ selected". There are cases in which a set of parameters not selected by the information processing device 100 is referred to as "parameter group θ excluded".

The information processing device 100 cooperates with the quantum computation device 201 such that the first iteration in VQE computation is executed. At this time, for example, the information processing device 100 sets each parameter of the n parameters as a target parameter. For example, the information processing device 100 executes the first iteration such that the value of each parameter set as a target parameter is updated, and obtains an initial value of each parameter.

For example, there may be a case in which the information processing device 100 sets the initial value of each parameter to a random value, a value set by a user in advance, or the like, and sets only the selected parameter group θ selected as target parameters. For example, there may be a case in which the information processing device 100 executes the first iteration such that only the values of the selected parameter group θ selected set as target parameters are updated.

The information processing device 100 cooperates with the quantum computation device 201 such that the second and subsequent iterations in VQE computation are executed after only the selected parameter group θ selected is set as target parameters. For example, the information processing device 100 executes the second and subsequent iterations such that only the values of the selected parameter group θ selected set as target parameters are updated.

The information processing device 100 determines whether the number of times the iteration is executed has reached the number of times of reconsideration. The number of times of reconsideration is 10x + 1. x is a positive integer. When the number of times of reconsideration has been reached, the information processing device 100 considers whether each parameter of the parameter group θ excluded is to be newly added to the target parameters.

For example, the information processing device 100 specifies two or more patterns representing combinations of the values of respective parameters of the parameter group θ excluded based on an orthogonal table corresponding to the number of parameters included in the parameter group θ excluded. For example, by using the quantum computation device 201, the information processing device 100 executes quantum chemical computation and calculates energy for each pattern of the specified two or more patterns using a predetermined cost function.

For example, the information processing device 100 searches for and newly selects, as the parameters useful in VQE computation, parameters having a relatively large influence on energy based on the calculated energy. In the following description, there are cases in which parameters newly selected by the information processing device 100 are referred to as "parameters θ added". For example, there may be a case in which the information processing device 100 does not select the parameters θ added when parameters for which the correlation coefficient is equal to or larger than the first threshold, parameters for which the absolute value of aₖ is equal to or larger than the second threshold, or the like do not exist.

For example, the information processing device 100 adds the newly selected parameters θ added to the parameter group θ selected, and deletes the newly selected parameters θ added from the parameter group θ excluded. In the following description, there are cases in which the parameter group θ selected after addition is referred to as "parameter group θ selected‴. The information processing device 100 cooperates with the quantum computation device 201 such that the iterations subsequent to the number of times of reconsideration in VQE computation are executed after only the selected parameter group θ selected' is set as target parameters. For example, the information processing device 100 executes the iterations subsequent to the number of times of reconsideration such that only the values of the selected parameter group θ selected' set as target parameters are updated.

Similarly, the information processing device 100 considers whether each parameter of the parameter group θ excluded is to be newly added to the target parameters each time when the number of times the iteration is executed reaches the number of times of reconsideration. In response to that a predetermined convergence condition is satisfied, the information processing device 100 completes VQE computation. When VQE computation is completed, the information processing device 100 outputs a result of executing VQE computation. Consequently, the information processing device 100 may narrow down the parameters useful in VQE computation and set the parameters as target parameters, and may achieve reduction in the processing time taken when VQE computation is executed while maintaining the accuracy of VQE computation.

For example, the information processing device 100 may temporarily suspend VQE computation and update the parameter group θ selected each time when the number of times the iteration is executed reaches the number of times of reconsideration. For this reason, the information processing device 100 may cope with variation of the parameters useful in VQE computation during execution of VQE computation, and may achieve reduction in the processing time taken when VQE computation is executed while maintaining the accuracy of VQE computation.

### (Specific Example of Operation of Information Processing Device 100)

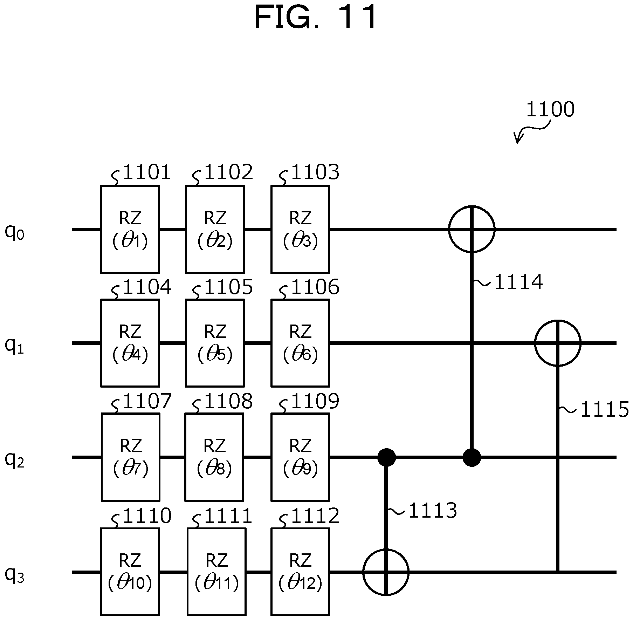

Next, a specific example of the operation of the information processing device 100 will be described with reference to FIGs. 11 to 16.

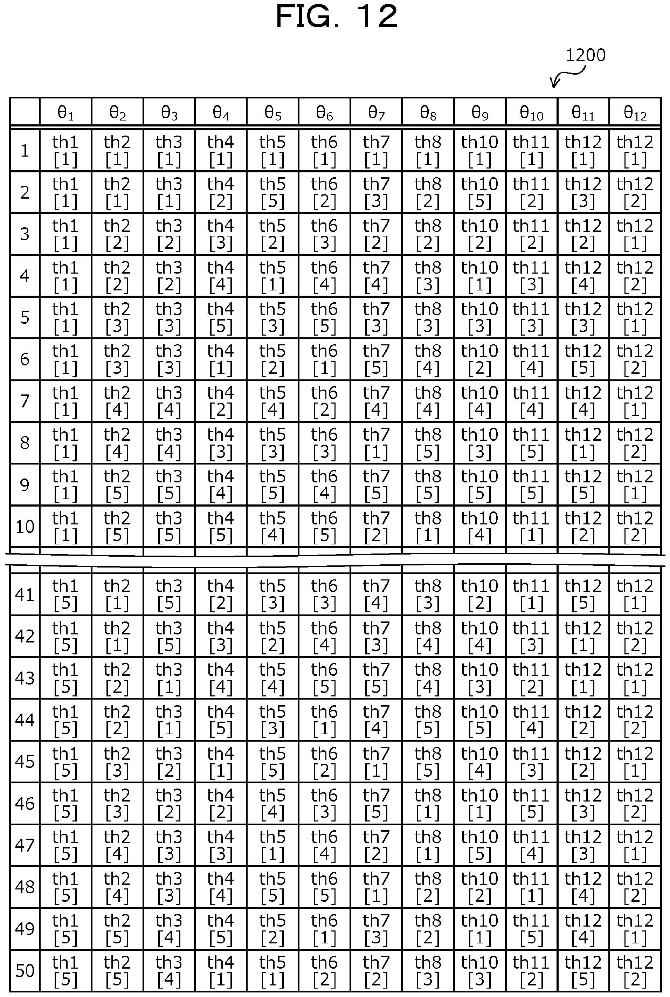

FIGs. 11 to 16 are explanatory diagrams illustrating a specific example of the operation of the information processing device 100. In FIG. 11, the information processing device 100 executes VQE computation for solving a target problem related to an H₂ molecule. In this case, a variational quantum circuit 1100 is used in VQE computation. For example, the variational quantum circuit 1100 includes rotation gates 1101 to 1112. The variational quantum circuit 1100 includes controlled NOT gates 1113 to 1115. The parameters of the variational quantum circuit 1100 are θ₁ to θ₁₂ related to the rotation gates 1101 to 1112, respectively. θ₁ to θ₁₂ indicate rotation angles. Therefore, the number of parameters is twelve. Next, description proceeds to that of FIG. 12.

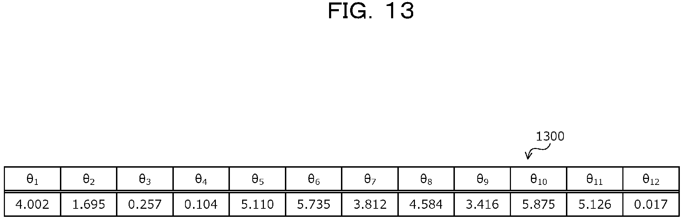

In FIG. 12, the information processing device 100 acquires orthogonal table 1200 of five levels and twelve parameters. Each row of orthogonal table 1200 indicates a pattern representing a combination of the five levels. The leftmost column of orthogonal table 1200 indicates pattern number. In orthogonal table 1200, thk[i] indicates that the i-th level i corresponds to the k-th parameter θₖ. k is 1, 2, ..., 12. i is 1, 2, ..., 5. Next, description proceeds to that of FIG. 13.

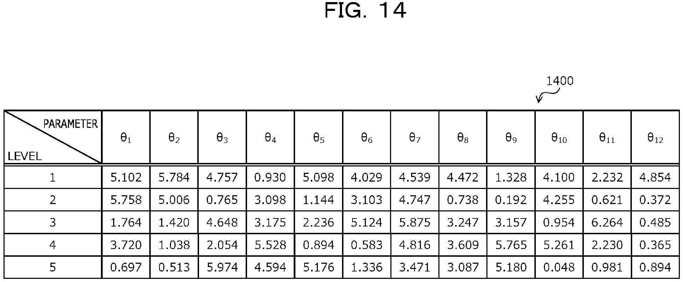

In FIG. 13, the information processing device 100 cooperates with the quantum computation device 201 such that the first iteration in VQE computation is executed. At this time, for example, the information processing device 100 sets parameters θ₁ to θ₁₂ as target parameters. For example, the information processing device 100 executes the first iteration such that the values of parameters θ₁ to θ₁₂ set as target parameters are updated, and obtains the initial values of parameters θ₁ to θ₁₂ as illustrated in table 1300. Next, description proceeds to that of FIG. 14.

In FIG. 14, the information processing device 100 applies any value in the range [0, 2π] to level i corresponding to parameter θₖ, and generates level table 1400 representing the applied values. The value applied to level i may be different for each parameter θₖ. In the example of FIG. 14, as illustrated in level table 1400, the information processing device 100 applies a random value in the range [0, 2π] to level i corresponding to parameter θₖ.

The information processing device 100 specifies 50 patterns representing combinations of the values of parameters θ₁ to θ₁₂ based on orthogonal table 1200 and level table 1400. Consequently, the information processing device 100 may specify which patterns representing combinations of the values of parameters θ₁ to θ₁₂ are preferable for being tested by calculating energy using a predetermined cost function f.

By using the quantum computation device 201, the information processing device 100 executes quantum chemical computation and calculates energy for each pattern of the specified 50 patterns using the predetermined cost function f. For example, the information processing device 100 calculates, as a calculation result indicating energy, an output of the predetermined cost function f according to the input of the combination of the values of parameters θ₁ to θ₁₂ in each pattern of the specified 50 patterns.

The information processing device 100 generates the regression model E = Σₖ₌₁¹²aₖθₖ including an objective variable corresponding to the calculation result, an explanatory variable obtained by normalizing parameters θ₁ to θ₁₂, and a coefficient related to the explanatory variable, based on the calculated calculation result. The information processing device 100 selects the top six parameters θₖ in descending order of the absolute value of aₖ, and sets the selected parameters as the parameter group θ selected. The information processing device 100 selects parameters θ₁₁, θ₂, θ₅, θ₁₂, θ₆, and θ₈.

The information processing device 100 cooperates with the quantum computation device 201 such that up to 20 iterations are executed until a predetermined convergence condition is satisfied after only the selected parameter group θ selected is set as target parameters whose value is to be updated. For example, the information processing device 100 executes 20 iterations such that only the values of the selected parameter group θ selected set as target parameters are updated. When the predetermined convergence condition is satisfied, the information processing device 100 completes VQE computation. For example, the predetermined convergence condition is that the magnitude of the gradient vector of the cost function f is equal to or smaller than the threshold 1 × 10⁻⁸.

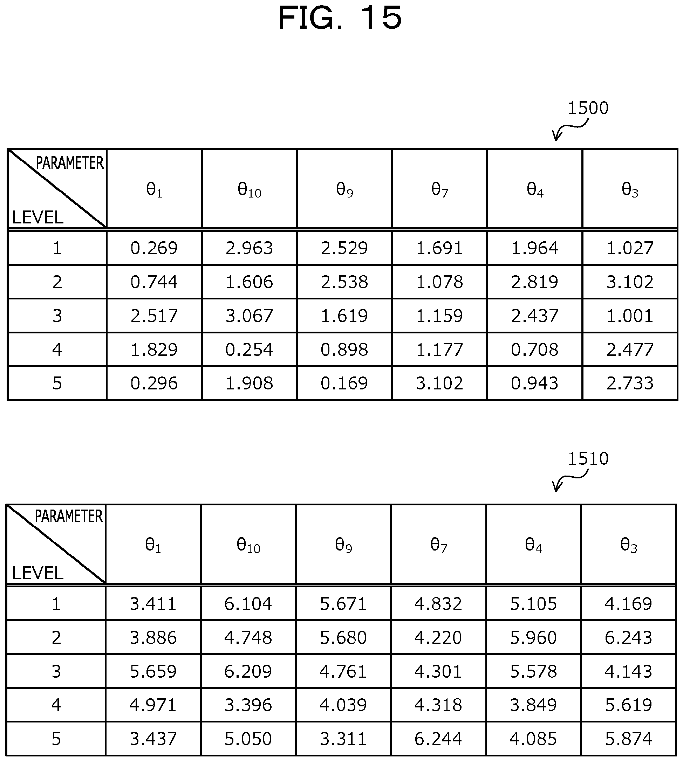

When the number of times the iteration is executed has reached the number of times of reconsideration without satisfying the predetermined convergence condition, the information processing device 100 temporarily suspends VQE computation. The number of times of reconsideration is 20x + 1. x is a positive integer. Since the number of times of reconsideration has been reached, the information processing device 100 considers whether each parameter of the parameter group θ excluded is to be newly added to the target parameters. The parameter group θ excluded includes parameters θ₁, θ₃, θ₄, θ₇, θ₉, and θ₁₀. Next, description proceeds to that of FIG. 15.

In FIG. 15, the information processing device 100 applies any value in the range [0, π] to level i corresponding to parameter θₖ in the parameter group θ excluded, and generates level table 1500 representing the applied values. The information processing device 100 applies any value in the range [π, 2π] to level i corresponding to parameter θₖ in the parameter group θ excluded, and generates level table 1510 representing the applied values. The value applied to level i may be different for each parameter θₖ.

In the example of FIG. 15, as illustrated in level table 1500, the information processing device 100 applies a random value in the range [0, π] to level i corresponding to parameter θₖ. As illustrated in level table 1510, the information processing device 100 applies a random value in the range [π, 2π] to level i corresponding to parameter θₖ.

The information processing device 100 specifies 100 patterns representing combinations of the values of parameters θ₁, θ₃, θ₄, θ₇, θ₉, and θ₁₀ based on orthogonal table 1200 and level tables 1500 and 1510. Consequently, the information processing device 100 may specify which patterns representing combinations of the values of parameters θ₁, θ₃, θ₄, θ₇, θ₉, and θ₁₀ are preferable for being tested by calculating energy using the predetermined cost function f.

By using the quantum computation device 201, the information processing device 100 executes quantum chemical computation and calculates energy for each pattern of the specified 100 patterns using the predetermined cost function f. For example, the information processing device 100 calculates, as a calculation result indicating energy, an output of the predetermined cost function f according to the input of the combination of the values of parameters θ₁, θ₃, θ₄, θ₇, θ₉, and θ₁₀ in each pattern of the specified 100 patterns.

The information processing device 100 generates the regression model E = Σₖ₌₁⁶aₖθₖ including an objective variable corresponding to the calculation result, an explanatory variable obtained by normalizing parameters θ₁, θ₃, θ₄, θ₇, θ₉, and θ₁₀, and a coefficient related to the explanatory variable, based on the calculated calculation result. The information processing device 100 selects parameters θₖ for which the absolute value of aₖ is equal to or larger than a threshold, and adds the parameters to the parameter group θ selected. The information processing device 100 selects parameter θ₉.

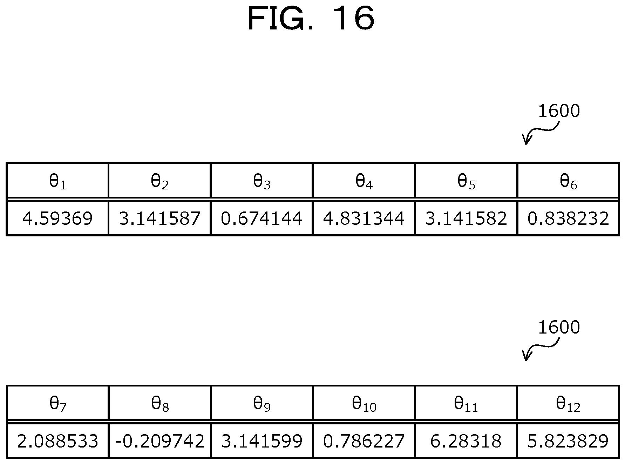

The information processing device 100 cooperates with the quantum computation device 201 such that up to 20 iterations are executed until the predetermined convergence condition is satisfied after only the parameter group θ selected is set as target parameters whose value is to be updated. For example, the information processing device 100 executes 20 iterations such that only the values of the parameter group θ selected set as target parameters are updated. When the predetermined convergence condition is satisfied, the information processing device 100 completes VQE computation. Next, description proceeds to that of FIG. 16.

In FIG. 16, the information processing device 100 completes VQE computation since the predetermined convergence condition is satisfied when the 27th iteration is executed. When VQE computation is completed, the information processing device 100 outputs the total energy value E = - 1.1361894540151203 and the combination of the values of parameters θ₁ to θ₁₂ illustrated in table 1600 as a result of executing VQE computation. Consequently, the information processing device 100 may enable the solution to the target problem to be referred to outside.

In this way, the information processing device 100 may limit parameters whose value is to be updated in order to reduce the processing time taken when VQE computation is executed. At this time, in order to maintain the accuracy of VQE computation, the information processing device 100 may efficiently test combinations of the values of respective parameters of two or more parameters in accordance with the design of experiments, and may accurately select parameters useful in VQE computation. The information processing device 100 may reconsider parameters whose value is to be updated when iteration is repeatedly executed, and may easily maintain the accuracy of VQE computation. Consequently, the information processing device 100 may reduce the processing time taken when VQE computation is executed while maintaining the accuracy of VQE computation.

### (Overall Processing Procedure)

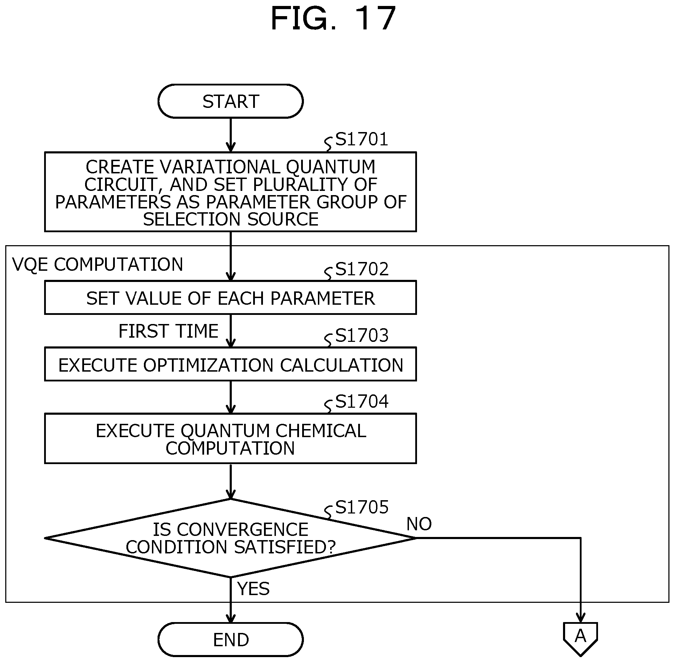

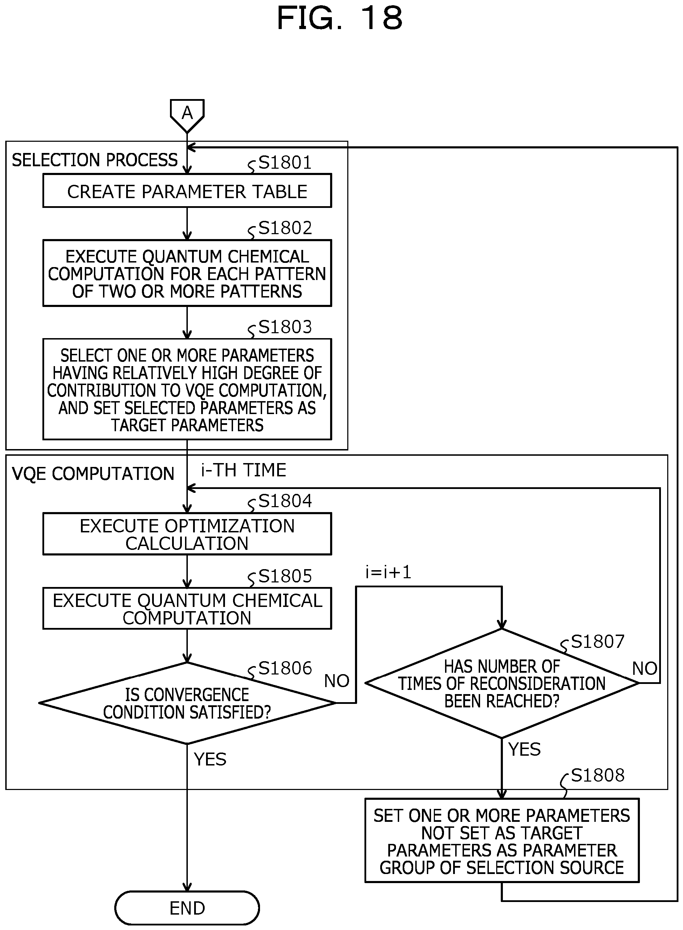

Next, an example of an overall processing procedure executed by the information processing device 100 will be described with reference to FIGs. 17 and 18. For example, the overall processing is realized by the CPU 301, a storage area such as the memory 302 or the recording medium 305, and the network I/F 303 illustrated in FIG. 3.

FIGs. 17 and 18 are flowcharts illustrating an example of the overall processing procedure. In FIG. 17, the information processing device 100 creates a variational quantum circuit, and sets a plurality of parameters defining the variational quantum circuit as a parameter group of selection source (step S1701).

The information processing device 100 sets the value of each parameter of the plurality of parameters (step S1702). The information processing device 100 calculates the value of each parameter by executing the first optimization calculation based on the set value of each parameter (step S1703). The information processing device 100 controls the quantum computation device 201 such that quantum chemical computation is executed (step S1704).

The information processing device 100 determines whether a convergence condition is satisfied (step S1705). When the convergence condition is satisfied (step S1705: Yes), the information processing device 100 ends the overall processing. On the other hand, when the convergence condition is not satisfied (step S1705: No), the information processing device 100 proceeds to the processing of step S1801 in FIG. 18.

In FIG. 18, the information processing device 100 creates, with reference to an orthogonal table, a parameter table representing two or more patterns in which the values of respective parameters included in the set parameter group of selection source are combined (step S1801).

The information processing device 100 controls the quantum computation device 201 such that quantum chemical computation is executed for each pattern of the two or more patterns, and acquires a calculation result of energy (step S1802). The information processing device 100 selects one or more parameters having a relatively high degree of contribution to VQE computation from the plurality of parameters based on a result of executing quantum chemical computation, and sets the selected parameters as target parameters whose value is to be updated (step S 1803).

The information processing device 100 calculates a value to be newly set as a target parameter by executing the i-th optimization calculation (step S1804). The information processing device 100 controls the quantum computation device 201 such that quantum chemical computation is executed (step S1805).

The information processing device 100 determines whether the convergence condition is satisfied (step S1806). When the convergence condition is satisfied (step S1806: Yes), the information processing device 100 ends the overall processing. On the other hand, when the convergence condition is not satisfied (step S1806: No), the information processing device 100 proceeds to the processing of step S1807.

In step S1807, the information processing device 100 determines whether the number of times the iteration is executed has reached the number of times of reconsideration (step S 1807). When the number of times of reconsideration has been reached (step S1807: Yes), the information processing device 100 proceeds to the processing of step S1808. On the other hand, when the number of times of reconsideration has not been reached (step S1807: No), the information processing device 100 returns to the processing of step S1804.

In step S1808, the information processing device 100 sets one or more parameters that are not set as target parameters in the plurality of parameters, as the parameter group of selection source (step S1808). The information processing device 100 returns to the processing of step S1801. Consequently, the information processing device 100 may achieve reduction in the processing time taken when VQE computation is executed while maintaining the accuracy of VQE computation.

As has been described above, according to the information processing device 100, it is possible to specify two or more patterns representing combinations of the values of respective parameters of a plurality of parameters defining a predetermined variational quantum circuit to be used for quantum chemical computation in VQE computation. According to the information processing device 100, it is possible to select one or more first parameters determined to have a relatively high degree of contribution to VQE computation from the plurality of parameters based on a calculation result of a predetermined cost function for each pattern of the specified two or more patterns. According to the information processing device 100, it is possible to control an arithmetic unit that executes the predetermined variational quantum circuit such that the selected one or more first parameters are set as target parameters whose value is to be updated in VQE computation and at least one iteration of VQE computation is executed. Consequently, the information processing device 100 may achieve reduction in the processing time taken when VQE computation is executed while maintaining the accuracy of VQE computation.

According to the information processing device 100, it is possible to specify two or more patterns that are a part of all patterns representing combinations of the values of respective parameters with reference to an orthogonal table that limits the way of combining the values of respective parameters in accordance with the design of experiments. Consequently, the information processing device 100 may accurately evaluate the degree of contribution to VQE computation for each parameter while suppressing an increase in the processing amount.

According to the information processing device 100, in a case where iteration of VQE computation is executed a predetermined number of times, it is possible to newly specify two or more patterns representing combinations of the values of respective parameters of the remaining parameters that are not the target parameters in the plurality of parameters. According to the information processing device 100, it is possible to newly select one or more first parameters from the remaining parameters based on a calculation result of the predetermined cost function for each pattern of the newly specified two or more patterns. According to the information processing device 100, the arithmetic unit may be further controlled such that the one or more newly selected first parameters are added to the target parameters and at least one iteration subsequent to the predetermined number of times in VQE computation is executed. Consequently, the information processing device 100 may improve the accuracy of VQE computation.

According to the information processing device 100, it is possible to calculate a correlation coefficient between an objective variable corresponding to the predetermined cost function and an explanatory variable corresponding to each parameter, based on the calculation result of the predetermined cost function for each pattern. According to the information processing device 100, it is possible to select, as the one or more first parameters, one or more parameters for which the calculated correlation coefficient is equal to or larger than a threshold, from the plurality of parameters. Consequently, the information processing device 100 may accurately evaluate the degree of contribution to VQE computation for each parameter and may accurately select one or more first parameters.

According to the information processing device 100, it is possible to specify a regression model including an objective variable corresponding to the predetermined cost function, an explanatory variable corresponding to each parameter, and a coefficient related to the explanatory variable, based on the calculation result of the predetermined cost function for each pattern. According to the information processing device 100, it is possible to select, as the one or more first parameters, one or more parameters for which the coefficient is equal to or larger than a threshold in the specified regression model. Consequently, the information processing device 100 may accurately evaluate the degree of contribution to VQE computation for each parameter and may accurately select one or more first parameters.

According to the information processing device 100, in the case where iteration of VQE computation is executed a predetermined number of times, it is possible to newly specify two or more patterns such that the number of patterns to be newly specified increases as the number of parameters included in the remaining parameters decreases. Consequently, the information processing device 100 may increase the number of patterns to be tested in a range in which the processing amount when two or more patterns are specified is not equal to or larger than a certain amount, and may accurately evaluate the degree of contribution to VQE computation for each parameter.

According to the information processing device 100, it is possible to control the arithmetic unit such that the first iteration of VQE computation is executed, and acquire an initial value of each parameter of the plurality of parameters. Consequently, the information processing device 100 may use appropriate initial values for the remaining parameters that are not the target parameters, and may easily maintain the accuracy of VQE computation.

The information processing method described in the present embodiment may be realized by executing a program prepared in advance by a computer such as a PC or a workstation. The information processing program described in the present embodiment is recorded in a computer-readable recording medium, and is executed by being read from the recording medium by the computer. The recording medium is a hard disk, a flexible disk, a compact disc (CD)-ROM, a magneto-optical (MO) disc, a Digital Versatile Disc (DVD), or the like. The information processing program described in the present embodiment may be distributed via a network such as the Internet.

The following appendices are further disclosed in relation to the above-described embodiment.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. An information processing program comprising instructions which, when executed by a computer, cause the computer to execute processing comprising:
specifying two or more patterns that represent combinations of values of respective parameters of a plurality of parameters that defines a predetermined variational quantum circuit to be used for quantum chemical computation in computation by a variational quantum eigensolver method;
selecting one or more first parameters determined to have a relatively high degree of contribution to the computation from the plurality of parameters based on a calculation result of a predetermined cost function used for the quantum chemical computation for each pattern of the two or more patterns that have been specified; and
controlling, by setting the one or more first parameters as target parameters whose value is to be updated in the computation, an arithmetic device that executes the predetermined variational quantum circuit, to cause the arithmetic device executes at least one iteration of the computation using the one or more first parameters.

2. The information processing program according to claim 1, wherein
the respective parameters are able to take any value of a plurality of discrete values, and
the specifying
specifies two or more patterns that are a part of all patterns that represent combinations of values of the respective parameters with reference to an orthogonal table that limits a way of combining values of the respective parameters in accordance with a design of experiments.

3. The information processing program according to claim 1 or 2, wherein
in a case where the arithmetic device is controlled and iteration of the computation is executed a predetermined number of times, two or more patterns are newly specified that represent combinations of values of respective parameters of remaining parameters that are not the target parameters in the plurality of parameters,
one or more first parameters determined to have a relatively high degree of contribution to the computation are newly selected from the remaining parameters based on a calculation result of the predetermined cost function for each pattern of the two or more patterns that have been newly specified, and
the arithmetic device is further controlled such that the one or more first parameters that have been newly selected are added to the target parameters and at least one iteration subsequent to the predetermined number of times in the computation is executed.

4. The information processing program according to claim 1 or 2, wherein
the selecting
calculates a correlation coefficient between an objective variable that corresponds to the predetermined cost function and an explanatory variable that corresponds to the respective parameters based on a calculation result of the predetermined cost function for each pattern of the two or more patterns that have been specified, and selects, as the one or more first parameters, one or more parameters for which the correlation coefficient that has been calculated is equal to or larger than a threshold, from the plurality of parameters.

5. The information processing program according to claim 1 or 2, wherein
the selecting
specifies a regression model that includes an objective variable that corresponds to the predetermined cost function, an explanatory variable that corresponds to the respective parameters, and a coefficient related to the explanatory variable based on a calculation result of the predetermined cost function for each pattern of the two or more patterns that have been specified, and selects, as the one or more first parameters, one or more parameters for which the coefficient is equal to or larger than a threshold in the regression model that has been specified.

6. The information processing program according to claim 3, wherein
the newly specifying
newly specifies two or more patterns that represent combinations of values of respective parameters of the remaining parameters such that a number of patterns to be newly specified increases as a number of parameters included in the remaining parameters decreases in accordance with a design of experiments in a case where the arithmetic device is controlled and iteration of the computation is executed a predetermined number of times.

7. An information processing method implemented by a computer, the information processing method comprising:
the computer specifying two or more patterns that represent combinations of values of respective parameters of a plurality of parameters that defines a predetermined variational quantum circuit to be used for quantum chemical computation in computation by a variational quantum eigensolver method;
the computer selecting one or more first parameters determined to have a relatively high degree of contribution to the computation from the plurality of parameters based on a calculation result of a predetermined cost function used for the quantum chemical computation for each pattern of the two or more patterns that have been specified; and
the computer controlling, by setting the one or more first parameters as target parameters whose value is to be updated in the computation, an arithmetic device that executes the predetermined variational quantum circuit, to cause the arithmetic device executes at least one iteration of the computation using the one or more first parameters.

8. An information processing apparatus comprising a control unit configured to perform processing comprising:
specifying two or more patterns that represent combinations of values of respective parameters of a plurality of parameters that defines a predetermined variational quantum circuit to be used for quantum chemical computation in computation by a variational quantum eigensolver method;
selecting one or more first parameters determined to have a relatively high degree of contribution to the computation from the plurality of parameters based on a calculation result of a predetermined cost function used for the quantum chemical computation for each pattern of the two or more patterns that have been specified; and
controlling, by setting the one or more first parameters as target parameters whose value is to be updated in the computation, an arithmetic device that executes the predetermined variational quantum circuit, to cause the arithmetic device executes at least one iteration of the computation using the one or more first parameters.
